# EUROPÄISCHE PATENTSCHRIFT

(11) **EP 3 495 695 B1**
(45) Veröffentlichungstag und Bekanntmachung des Hinweises auf die Patenterteilung: **21.10.2020**
(21) Anmeldenummer: 18209426.8
(22) Anmeldetag: 30.11.2018
(51) Int. Cl.: F16H 57/08, F16H 1/46

(54) **GETRIEBEGEHÄUSE FÜR EIN PLANETENGETRIEBE**
PLANET CARRIER FOR A PLANETARY GEAR
BOÎTIER D'ENGRENAGE POUR UNE COMMANDE PAR ENGRENAGES PLANÉTAIRES

(30) Priorität: 07.12.2017 DE 102017129110
(43) Veröffentlichungstag der Anmeldung: 12.06.2019
(73) Patentinhaber: Bühler Motor GmbH, 90459 Nürnberg (DE)
(72) Erfinder: ANTES, Michael, 91358 Kunreuth (DE); REINECKER, Bernd, 90491 Nürnberg (DE); RICHTER, Olaf, 90547 Stein (DE); WEISKE, Klaus, 90571 Schwaig (DE); HETTYCH, Reiner, 90471 Nürnberg (DE)

(56) Entgegenhaltungen:
- EP-A1- 2 479 458
- EP-A1- 2 644 309
- DE-A1-102015 206 933
- JP-A- 2012 189 120

## Beschreibung

Die Erfindung betrifft ein Getriebegehäuse für ein Planetengetriebe gemäß dem Oberbegriff des Anspruchs 1. Ferner betrifft die Erfindung ein Planetengetriebe und eine Motor-Getriebekombination mit einem solchen Getriebegehäuse. Die Erfindung befasst sich auch mit einem Herstellungsverfahren für ein Getriebegehäuse. Ein Getriebegehäuse nach dem Oberbegriff des Anspruchs 1 ist beispielsweise aus EP 2 644 309 B1 bekannt.

EP 2 644 309 B1 beschreibt ein Getriebegehäuse, das einen im Wesentlichen hohlzylinderförmigen Gehäusekörper aufweist. In den Gehäusekörper ist eine Innenverzahnung integriert. Der Gehäusekörper ist beidseitig offen und wird jeweils längsaxial mit einem Lagerflansch verschlossen. Dabei ist vorgesehen, den jeweiligen Lagerflansch mit dem Gehäusekörper durch eine Laser-Durchstrahlschweißung stoffschlüssig miteinander zu verbinden. Dazu ist ein Überdeckungsbereich vorgesehen, in welchem der Lagerflansch und der Gehäusekörper sich abschnittsweise überdecken. Ein Laserstrahl wird auf diesen Überlappungsbereich gerichtet, so dass das Material des Lagerflanschs aufschmilzt und sich mit dem Gehäusekörper stoffschlüssig verbindet. Diese Herstellungsweise ist besonders einfach und kostengünstig realisierbar.

Die EP 2 479 458 A1 offenbart ein modular aufgebautes Planetengetriebe umfassend drei Getriebestufen, die als eigenständige Module 1, 2 und 3 ausgeführt sind und in einem gemeinsamen Gehäuse 5 untergebracht sind, das antriebsseitig durch einen Motorflansch 51 und abtriebsseitig durch einen Getriebedeckel 52 abgeschlossen ist. Die drei Getriebestufen 1, 2 und 3 umfassen drei Hohlradsegmente 16, 26 und 36, die in einem gemeinsamen Gehäuse 5 aufgenommen werden und ein Hohlrad 6 des Planetengetriebes zusammen bilden. Dabei sind die drei Hohlradsegmente 16, 26 und 36 durch Schweißen, Pressverbindung oder Formschluss miteinander verbunden.

Insbesondere bei kleinen Getrieben ist es oft erforderlich, ein möglichst hohes Übersetzungsverhältnis bei möglichst kompakten Abmessungen des Getriebegehäuses zu realisieren. Hier weist das bekannte Getriebegehäuse Nachteile auf, da wegen des erforderlichen Überdeckungsbereichs Leerräume entstehen, die ungenutzt bleiben.

Insofern ist es Aufgabe der vorliegenden Erfindung, eine Verbesserung des bekannten Getriebegehäuses anzugeben, wobei insbesondere eine hohe Funktionalität bei geringen Abmessungen des Getriebegehäuses realisiert werden sollen. Eine weitere Aufgabe der Erfindung besteht darin, ein Planetengetriebe und eine Motor-Getriebekombination mit einem solchen Getriebegehäuse vorzuschlagen. Ferner ist es Aufgabe der Erfindung, ein entsprechendes Herstellungsverfahren anzugeben.

Erfindungsgemäß wird diese Aufgabe im Hinblick auf das Getriebegehäuse durch den Gegenstand des Anspruchs 1, im Hinblick auf das Planetengetriebe und die Motor-Getriebekombination durch die Gegenstände der Ansprüche 12 und 14 sowie im Hinblick auf das Herstellungsverfahren durch den Gegenstand des Anspruchs 15 gelöst.

So beruht die Erfindung auf dem Gedanken, ein Getriebegehäuse für ein Planetengetriebe mit einem hohlzylinderförmigen Gehäusekörper anzugeben, wobei der Gehäusekörper eine erste Innenverzahnung aufweist. Das Getriebegehäuse umfasst ferner einen Lagerflansch, der zumindest abschnittsweise koaxial in den Gehäusekörper eingreift, so dass ein Überdeckungsbereich gebildet ist. Der Gehäusekörper und der Lagerflansch sind im Überdeckungsbereich durch eine Laser-Durchstrahlschweißung stoffschlüssig miteinander verbunden. Erfindungsgemäß ist nun vorgesehen, dass der Lagerflansch im Überdeckungsbereich eine zweite Innenverzahnung aufweist.

Bei der Erfindung wird also der Überdeckungsbereich zusätzlich genutzt, um eine zweite Innenverzahnung vorzusehen. Das hat den Vorteil, dass bei kompakten Abmessungen des Getriebegehäuses ein zusätzliches Planetengetriebe integriert werden kann. Damit können eine Vielzahl unterschiedlicher Getriebeuntersetzungen mit verschiedenen Untersetzungsverhältnissen realisiert werden. Insgesamt weist das erfindungsgemäße Getriebegehäuse so bei kompakten Abmessungen eine hohe Funktionalität auf.

Ein weiterer Vorteil der Erfindung ergibt sich aus der Herstellung des erfindungsgemäßen Getriebegehäuses. Bei bekannten Gehäusekörpern, die zwei Innenverzahnungen aufweisen, ist es zwingend erforderlich, dass diese Gehäusekörper beidseitig axial offen sind. Nur so ist es möglich, dass die beiden Innenverzahnungen unabhängig voneinander im Gehäusekörper ausgeformt werden können. Bei der Erfindung reicht es hingegen aus, wenn der Gehäusekörper einseitig axial offen ist, da die zweite Innenverzahnung im Lagerflansch angeordnet ist, der mit dem Gehäusekörper anschließend verbunden wird. Der Lagerflansch kann auch lediglich einseitig axial offen sein, um die zweite Innenverzahnung ausformen zu können. Insgesamt kann so das Getriebegehäuse aus einer geringen Anzahl an Bauteilen hergestellt werden, was einerseits für die Montage erleichternd wirkt und andererseits die Stabilität des Getriebegehäuses erhöht.

Insofern ist bei einer bevorzugten Ausführungsform der Erfindung vorgesehen, dass der Gehäusekörper und der Lagerflansch jeweils einen Lagerschild aufweisen, der einen Innenraum des Getriebegehäuses axial begrenzt. Der Lagerschild kann eine Lageraufnahme für ein Wellenlager aufweisen. Insbesondere ist bevorzugt vorgesehen, dass konzentrisch im Lagerschild eine Lageraufnahme für ein Wellenlager ausgebildet ist. Der Lagerschild schließt damit das Getriebegehäuse, insbesondere Gehäusekörper bzw. den Lagerflansch, axial ab. Insofern bildet der Lagerschild, trotz der darin angeordneten Lageraufnahme, eine axiale Begrenzung, so dass der Gehäusekörper bzw. der Lagerflansch einseitig axial geschlossen sind.

Bevorzugt ist vorgesehen, dass jeweils der Gehäusekörper und/oder der Lagerflansch, insbesondere mit ihrem jeweils zugeordneten Lagerschild, einstückig ausgebildet sind. Das reduziert die Teileanzahl des erfindungsgemäßen Getriebegehäuses und erhöht ferner die Stabilität des Gehäusekörpers und des Lagerflanschs. Wegen der geringen Teilanzahl wird die Montage außerdem vereinfacht. Insgesamt führt die Ausbildung des Getriebegehäuses und/oder des Lagerflanschs in einstückiger Bauweise zu einer Reduktion der Herstellungskosten, insbesondere der Montagekosten.

Bei einer bevorzugten Ausführungsform der Erfindung kann vorgesehen sein, dass der Gehäusekörper und der Lagerflansch im Überdeckungsbereich zumindest abschnittsweise pressverbunden sind. Die Pressverbindung ermöglicht es, den Gehäusekörper und den Lagerflansch im Überdeckungsbereich ausreichend vorzufixieren, so dass eine gut geschlossene Schweißverbindung mittels des Laser-Durchstrahlschweißens hergestellt werden kann.

Bevorzugt ist vorgesehen, dass die erste Innenverzahnung an der zweiten Innenverzahnung anliegt. Mit anderen Worten kann vorgesehen sein, dass die zweite Innenverzahnung des Lagerflanschs bis an einen längsaxialen Randbereich des Lagerflanschs reicht. Der Lagerflansch kann dann so weit in den Gehäusekörper eingreifen, dass der längsaxiale Rand des Lagerflanschs unmittelbar an der ersten Innenverzahnung anliegt. Die zweite Innenverzahnung liegt so direkt an der ersten Innenverzahnung an. Eine solche Gestaltung nutzt den verfügbaren Innenraum des Getriebegehäuses gut aus, so dass insgesamt kompakte Außenabmessungen realisierbar sind.

Allerdings kann aus Gründen der Fertigungstoleranz auch vorgesehen sein, zwischen der ersten Innenverzahnung und der zweiten Innenverzahnung einen Luftspalt vorzusehen. Dieser Luftspalt kann beispielsweise auch zur Kompensation einer thermischen Ausdehnung des Getriebegehäuses zweckmäßig sein. In dieser Hinsicht umfasst die Erfindung nicht nur Ausführungsformen, bei welchen die erste Innenverzahnung und die zweite Innenverzahnung unmittelbar aneinander anliegen, sondern schließt auch Ausführungsformen ein, bei welchen die erste Innenverzahnung und die zweite Innenverzahnung beabstandet zueinander angeordnet sind.

Bei einer weiteren bevorzugten Ausführungsform des erfindungsgemäßen Getriebegehäuses ist vorgesehen, dass der Lagerflansch einen sich radial nach außen erstreckenden Ringsteg aufweist. Die Außenumfangsfläche des Ringstegs kann flächenbündig mit einer Außenumfangsfläche des Gehäusekörpers fluchten. Damit ist eine einheitliche Außengeometrie des Getriebegehäuses geschaffen, die für unterschiedliche Einbausituationen vorteilhaft ist. Allerdings kann die Außengeometrie des Lagerflanschs und/oder des Gehäusekörpers, insbesondere des gesamten Getriebegehäuses, auch andersartig gestaltet sein. Beispielsweise kann eine mehreckige Außengeometrie vorgesehen sein. Es ist auch möglich, dass sich der Ringsteg über die Außenumfangsfläche des Gehäusekörpers hinaus erstreckt, beispielsweise um einen Anschlag für den Einbau des Getriebegehäuses zu bilden.

Der Ringsteg kann zusätzlich wenigstens eine achsparallele Ausnehmung aufweisen, in die formschlüssig ein achsparalleler Vorsprung des Gehäusekörpers eingreift. Der Vorsprung des Gehäusekörpers bildet insoweit mit der Ausnehmung im Ringsteg eine Verdrehsicherung. Außerdem wird so eine Rotationsposition zwischen dem Lagerflansch und dem Gehäusekörper vorgegeben. Damit kann sichergestellt werden, dass der Gehäusekörper und der Lagerflansch korrekt zueinander ausgerichtet sind, bevor mittels Laser-Durchstrahlschweißens eine stoffschlüssige Verbindung zwischen Gehäusekörper und Lagerflansch hergestellt wird.

Alternative Ausführungsformen verzichten ggfs. auf den achsparallelen Vorsprung am Gehäusekörper, so das eine Relativdrehung zwischen dem Lagerflansch und dem Gehäusekörper möglich ist.

Der achsparallele Vorsprung und die achsparallele Ausnehmung können komplementär zueinander ausgebildet sein. Insbesondere können der achsparallele Vorsprung und die achsparallele Ausnehmung komplementär trapezförmig zueinander ausgebildet sein. Bei der Verbindung des Lagerflanschs mit dem Gehäusekörper wird der Lagerflansch vorzugsweise längsaxial in den Gehäusekörper eingeführt. Der achsparallele Vorsprung wird so parallel zur Längsachse des Getriebegehäuses in die achsparallele Ausnehmung eingeschoben. Eine trapezförmige Ausbildung des Vorsprungs und der Ausnehmung bildet insoweit eine Positionierhilfe, so dass sich der Lagerflansch bezüglich des Gehäusekörpers im Wesentlichen selbsttätig korrekt ausrichtet. Insofern hat eine trapezförmige Ausbildung des Vorsprungs und der Ausnehmung eine Selbstzentrierungswirkung.

Die Erfindung ist allerdings nicht auf eine trapezförmige Gestaltung von Vorsprung und Ausnehmung beschränkt. Alternative Geometrien für den achsparallelen Vorsprung und die achsparallele Ausnehmung sind ebenfalls möglich, sofern die Geometrie des Vorsprungs und der Ausnehmung jeweils komplementär zueinander ist. Insbesondere kann vorgesehen sein, dass der Vorsprung und die Ausnehmung komplementär dreiecksförmig oder zumindest halbkreisförmig bzw. teilovalförmig ausgebildet sind.

Bei weiteren bevorzugten Ausführungsformen des Getriebegehäuses kann vorgesehen sein, dass die erste Innenverzahnung und die zweite Innenverzahnung voneinander verschiedene Verzahnungsgeometrien aufweisen. Dabei kann insbesondere die erste Innenverzahnung ein geradverzahntes Hohlrad und die zweite Innenverzahnung ein schrägverzahntes Hohlrad bilden. Alternativ kann die erste Innenverzahnung ein schrägverzahntes Hohlrad und die zweite Innenverzahnung ein geradverzahntes Hohlrad bilden. Es ist auch möglich, dass beide Innenverzahnungen dieselbe Hohlradgeometrie aufweisen.

Die Erfindung betrifft ferner ein Planetengetriebe mit einem zuvor beschriebenen Getriebegehäuse und wenigstens ein erstes Planetenrad, das mit einem ersten Sonnenrad und mit der ersten Innenverzahnung kämmt. Ferner ist wenigstens ein zweites Planetenrad vorgesehen, das mit einem zweiten Sonnenrad und mit der zweiten Innenverzahnung kämmt. Im Wesentlichen umfasst die Erfindung somit ein Planetengetriebe mit zwei Getriebestufen, die gemeinsam in das zuvor beschriebene Getriebegehäuse integriert sind.

Ein weiterer Aspekt der Erfindung betrifft eine Motor-Getriebekombination mit einem zuvor erläuterten Planetengetriebe und einem Motorgehäuse, wobei das Motorgehäuse einen motorseitigen Verbindungsabschnitt des Lagerflanschs koaxial umgreift und mit dem motorseitigen Verbindungsabschnitt verbunden ist. Die Verbindung zwischen dem Motorgehäuse und dem motorseitigen Verbindungsabschnitt des Lagerflanschs erfolgt vorzugsweise verdrehsicher.

Insbesondere kann vorgesehen sein, dass der Verbindungsabschnitt wenigstens eine Crimpaufnahme für eine radial nach innen umformbare Crimpnase des Motorgehäuses aufweist. Insofern ist eine besonders einfache Verbindung zwischen dem Getriebegehäuse und dem Motorgehäuse erreicht. Durch radiales Crimpen wird damit eine stabile Verbindung geschaffen. Die Crimpverbindung ist dabei einfach und kostengünstig realisierbar.

Ferner befasst sich die Erfindung mit einem Verfahren zur Herstellung eines zuvor beschriebenen Getriebegehäuses. Bei dem erfindungsgemäßen Herstellungsverfahren werden ein Gehäusekörper mit einer ersten Innenverzahnung und ein Lagerflansch mit einer zweiten Innenverzahnung bereitgestellt. Der Gehäusekörper und der Lagerflansch werden formschlüssig koaxial zusammengeführt, so dass ein Überdeckungsbereich gebildet wird. Anschließend wird ein Laserstrahl auf den Überdeckungsbereich gerichtet, so dass der Gehäusekörper und der Lagerflansch mittels Laser-Durchstrahlschweißens stoffschlüssig miteinander verbunden werden.

Bei einer bevorzugten Variante des erfindungsgemäßen Herstellungsverfahrens wird das Getriebegehäuse während des Laser-Durchstrahlschweißens rotiert, so dass eine umlaufende Schweißnaht gebildet wird. Alternativ ist es möglich, dass das Getriebegehäuse ortsfest gehalten wird und stattdessen ein Laserstrahl um das Getriebegehäuse rotiert, so dass eine umlaufende Schweißnaht gebildet wird. Vorteilhaft ist es jedenfalls, wenn eine umlaufende Schweißnaht gebildet wird, da auf diese Weise einerseits eine hohe Stabilität der Schweißverbindung und andererseits eine gute Dichtigkeit des Getriebegehäuses erreicht werden.

Zur effizienten stoffschlüssigen Verbindung des Lagerflanschs mit dem Gehäusekörper ist es bevorzugt vorgesehen, den Laserstrahl auf eine Außenumfangsfläche des Lagerflanschs zu fokussieren. Der Laserstrahl durchleuchtet im Wesentlichen das Material des Gehäusekörpers im Überdeckungsbereich und bündelt thermische Energie auf der Außenumfangsfläche des Lagerflanschs. Dadurch werden im Bereich zwischen dem Lagerflansch und dem Gehäusekörper Temperaturen erzeugt, die zu einem Aufschmelzen der Materialien führen. Die Materialien verbinden sich dadurch stoffschlüssig, so dass eine feste, dichte und stabile Verbindung zwischen Lagerflansch und Gehäusekörper hergestellt ist.

Die Erfindung wird im Folgenden anhand eines bevorzugten Ausführungsbeispiels unter Bezugnahme auf die beigefügten schematischen Zeichnungen näher erläutert. Darin zeigen:
- Figur 1:: eine perspektivische Schnittansicht eines erfindungsgemäßen Getriebegehäuses nach einem bevorzugten Ausführungsbeispiel;
- Figur 2:: eine Längsschnittansicht des Getriebegehäuses gemäß Figur 1; und
- Figur 3:: eine Längsschnittansicht einer erfindungsgemäßen Motor-Getriebekombination gemäß einem bevorzugten Ausführungsbeispiel.

In den beigefügten Zeichnungen ist jeweils ein Getriebegehäuse gezeigt, das einen hohlzylinderförmigen Gehäusekörper 10 und einen Lagerflansch 20 aufweist. Der hohlzylinderförmige Gehäusekörper 10 umfasst eine erste Innenverzahnung 11. Der Lagerflansch 20 ist zumindest abschnittsweise ebenfalls hohlzylinderförmig ausgebildet und weist eine zweite Innenverzahnung 21 auf.

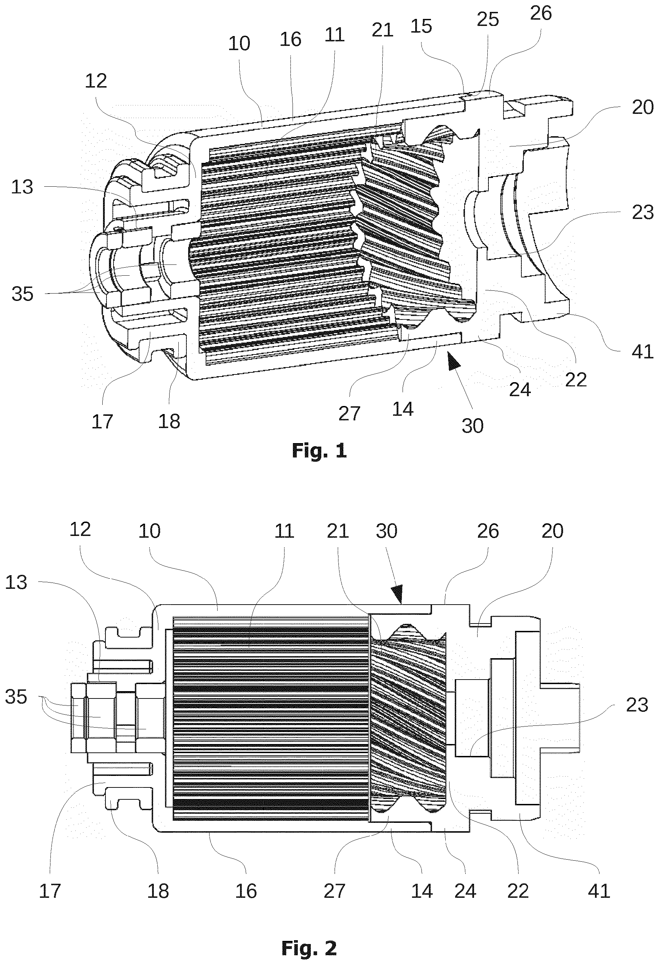

Wie beispielsweise in Fig. 2 gut erkennbar ist, ist der Lagerflansch 20 koaxial in den Gehäusekörper 10 eingesetzt. Dabei greift ein hohlzylinderförmiger Abschnitt, in dem die zweite Innenverzahnung 21 angeordnet ist, in einen Ringflansch 14 des Gehäusekörpers 10 ein. Der Ringflansch 14 ist im Wesentlichen ein längsaxialer Endabschnitt des Gehäusekörpers 10, der verzahnungsfrei ausgebildet ist. Der Ringflansch 14 umgreift einen längsaxialen Endabschnitt 27 des Lagerflanschs 20. Dabei überdeckt der Ringflansch 14 den Endabschnitt 27 auf dessen Außenumfangsfläche vollständig. Konkret ist bevorzugt vorgesehen, dass zwischen dem Endabschnitt 27 und dem Ringflansch 14 ein Pressverbund hergestellt ist.

Der Bereich, in welchem der Ringflansch 14 den Endabschnitt 27 überlappt, wird im Rahmen der vorliegenden Anmeldung als Überdeckungsbereich 30 bezeichnet. Wenigstens im Überdeckungsbereich 30 umfasst der Gehäusekörper 10 bzw. der Ringflansch 14 vorzugsweise ein Material, welches für Laserlicht transparent ist. Der Lagerflansch 20 weist im Überdeckungsbereich 30, insbesondere in seinem Endabschnitt 27, vorzugsweise ein Laserlicht absorbierendes Material auf.

Der Gehäusekörper 10 und der Lagerflansch 20 sind durch eine Laser-Durchstrahlschweißung miteinander verbunden. Dabei wird ein Laserstrahl von außen auf den Überdeckungsbereich 30 gerichtet. Das Laserlicht durchdringt das laserlicht-transparente Material des Ringflanschs 14 und trifft auf den Endabschnitt 27 des Lagerflanschs 20 auf. Das Material des Endabschnitts 27 absorbiert das Laserlicht, so dass es zu einer lokalen Temperaturerhöhung kommt. Dadurch wird an den Kontaktflächen zwischen dem Endabschnitt 27 und dem Ringflansch 14 Material aufgeschmolzen und der Endabschnitt 27 so mit dem Ringflansch 14 lokal verschmolzen. Der Endabschnitt 27 und der Ringflansch 14 werden auf diese Weise stoffschlüssig miteinander verbunden.

Bei den Ausführungsbeispielen gemäß Figuren 1 bis 3 ist jeweils vorgesehen, dass der Gehäusekörper 10 einen Lagerschild 12 aufweist. Der Lagerschild 12 des Gehäusekörpers 10 ist an einem im Lagerflansch 20 gegenüberliegenden Ende des Gehäuses 10 angeordnet. Insbesondere sind der Lagerschild 12 des Gehäusekörpers 10 und der Gehäusekörper 10 einstückig ausgebildet. Beispielsweise kann der Gehäusekörper 10 mit dem Lagerschild 12 als einstückiges Kunststoffspritzgussteil hergestellt sein.

Im Lagerschild 12 des Gehäusekörpers 10 ist eine Lageraufnahme 13 angeordnet. Die Lageraufnahme 13 ist durch einen hohlzylinderförmigen Abschnitt gebildet, der koaxial zur Längsachse des Gehäusekörpers 10 ausgerichtet ist. In der Lageraufnahme 13 des Gehäusekörpers 10 sind bei dem Ausführungsbeispiel gemäß Figuren 1 und 2 Wellenlager 35 angeordnet. Die Wellenlager ermöglichen die Lagerung einer Welle für ein Planetengetriebe. Vorzugsweise ist in der Lageraufnahme 13 des Gehäusekörpers 10 mittels Wellenlagern 35 eine Abtriebswelle eines Planetengetriebes anordenbar oder angeordnet.

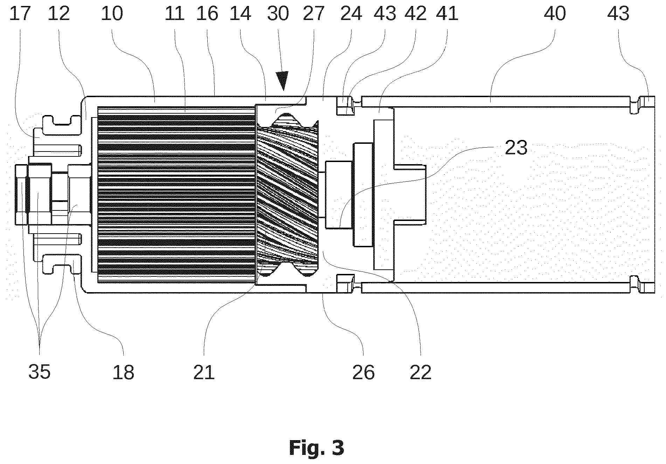

Der Lagerflansch 20 weist ebenfalls einen Lagerschild 22 auf. Der Lagerschild 22 des Lagerflanschs 20 schließt den Lagerflansch 20 längsaxial ab. Im Lagerschild 22 des Lagerflanschs 20 ist ferner eine Lageraufnahme 23 angeordnet. Die Lageraufnahme 23 dient zur Aufnahme eines Wellenlagers für eine Motorwelle eines Elektromotors. Vorzugsweise ist vorgesehen, dass ein Elektromotor mit dem Getriebegehäuse über den Lagerflansch 20 verbunden wird. Eine solche Verbindung ist beispielsweise in Fig. 3 gezeigt.

Der Lagerflansch 20 weist außerdem einen Ringsteg 24 auf, der als Endanschlag für den Ringflansch 14 dient. Wie in Fig. 2 gut erkennbar ist, ist der Lagerflansch 20 so weit koaxial in den Gehäusekörper 10 eingesetzt, dass der Ringflansch 14 an dem Ringsteg 24 anliegt. Dabei weist der Ringsteg 24 eine Höhe auf, die derart gewählt ist, dass eine Außenumfangsfläche 26 des Lagerflanschs 20, insbesondere des Ringstegs 24, flächenbündig mit der Außenumfangsfläche 16 des Gehäusekörpers 10, insbesondere des Ringflanschs 14, fluchtet. Andere Dimensionen sind selbstverständlich möglich. Beispielsweise kann der Ringsteg 24 über die Außenumfangsfläche (16) des Gehäusekörpers 10 hinausragen, um beispielsweise eine Halterung oder einen Anschlag zur Anbindung an externe Baugruppen zu bilden.

In Fig. 2 ist gut erkennbar, dass die erste Innenverzahnung 11, die vorzugsweise als geradverzahntes Hohlrad ausgebildet ist, sich vom Lagerschild 12 des Gehäusekörpers 10 bis zum Endabschnitt 27 des Lagerflanschs 20 erstreckt. Insoweit ist im Wesentlichen der gesamte freie Innenraum des Gehäusekörpers 10 durch die erste Innenverzahnung 11 ausgefüllt. Der im Getriebegehäuse verfügbare Raum wird damit bestmöglich ausgenutzt.

Der Lagerflansch 20 weist eine zweite Innenverzahnung 21 auf, die bei den dargestellten Ausführungsbeispielen als schrägverzahntes Hohlrad ausgebildet ist. Die zweite Innenverzahnung 21 erstreckt sich vom Lagerschild 22 des Lagerflanschs 20 bis zum Ende des Endabschnitt 27. Insbesondere ist vorgesehen, dass die zweite Innenverzahnung 21 sich im Wesentlichen bis zur ersten Innenverzahnung 11 erstreckt. Es ist jedoch möglich und bei dem Ausführungsbeispiel gemäß Figuren 1 und 2 auch vorgesehen, dass zwischen der ersten Innenverzahnung 11 und der zweiten Innenverzahnung 21 ein Luftspalt verbleibt. Insofern kann vorgesehen sein, dass der Endabschnitt 27 des Lagerflanschs 20 kürzer ist als der Ringflansch 14 des Gehäusekörpers 10. So bleibt zwischen der ersten Innenverzahnung 11 und der zweiten Innenverzahnung 21 ein Luftspalt, wenn der Ringflansch 14 des Gehäusekörpers 10 an dem Ringsteg 24 des Lagerflanschs 20 anliegt. Durch diese Gestaltung mit einem Luftspalt zwischen den Innenverzahnungen 11, 21 können beispielsweise Fehlertoleranzen ausgeglichen werden, die sich aus dem Herstellungsverfahren, insbesondere dem Kunststoffspritzgießen, für den Gehäusekörper 10 und/oder für den Lagerflansch 20 ergeben.

In Fig. 1 ist zudem angedeutet, dass der Ringflansch 14 einen achsparallelen Vorsprung 15 aufweist. Der Vorsprung erstreckt sich über axiales Ende des Ringflanschs 14 hinaus und greift in eine komplementäre, achsparallele Ausnehmung 25 im Ringsteg 24 ein. Dabei können der Vorsprung 15 und die Ausnehmung 25 so gestaltet sein, dass eine einfache Einführung des Vorsprungs 15 in die Ausnehmung 25 möglich ist. Beispielsweise können der Vorsprung 15 und die Ausnehmung 25 trapezförmig oder dreiecksförmig gestaltet sein, so dass sich eine Selbstzentrierung ergibt. Andere selbstzentrierende und/oder verdrehsichernde Geometrien des Vorsprungs 15 und der Ausnehmung 25 sind ebenfalls möglich.

Durch den achsparallelen Vorsprung 15, der in die achsparallele Ausnehmung 25 eingreift, wird zudem eine verdrehsichere Verbindung zwischen dem Lagerflansch 20 und dem Gehäusekörper 10 bereitgestellt. Außerdem ist so eine Positionierung von Lagerflansch 20 und Gehäusekörper 10 zueinander einfach möglich.

Generell können mehrere Vorsprünge 15 und Ausnehmungen 25 vorgesehen sein, die jeweils komplementär zueinander ausgebildet sind. Dabei können die mehreren Vorsprünge 15 und Ausnehmungen 25 gleiche oder verschiedene Komplementärgeometrien aufweisen. Wenn die mehreren Vorsprünge 15 und Ausnehmungen 25 unterschiedliche Komplementärgeometrien aufweisen, wird vorteilhaft auch eine Fehlmontage (Poka-Yoke-Prinzip) vermieden, da der Lagerflansch 20 nur in einer vorbestimmten Rotationsausrichtung mit dem Gehäusekörper 10 verbindbar ist.

Zur Einbindung des Getriebegehäuses gemäß Figuren 1 und 2 in eine komplexe Baugruppe, beispielsweise in ein Fahrzeug und/oder in ein medizintechnisches Gerät, weist der Gehäusekörper 10 an seinem Lagerschild 12 zusätzlich einen Montageflansch 17 auf. Der Montageflansch 17 ist in den Figuren 1 und 2 als im Wesentlichen rechteckiger, umlaufender Flansch dargestellt, dessen Ecken gerundet sind. Um den Montageflansch 17 herum erstreckt sich ein Dichtungselement 18.

In Fig. 3 ist die Anbindung des Getriebegehäuses an ein Motorgehäuse 40 gezeigt. Das Getriebegehäuse umfasst einen Gehäusekörper 10 mit einem Lagerschild 12. Am Lagerschild 12 ist ein Montageflansch 17 sowie eine Lageraufnahme 13 vorgesehen. Der Lagerschild 12, der Gehäusekörper 10, die Lageraufnahme 13 und der Montageflansch 17 sind vorzugsweise einstückig, insbesondere als Kunststoffspritzgussteil, ausgebildet.

Das Getriebegehäuse gemäß Fig. 3 umfasst außerdem einen Lagerflansch 20, der ein Lagerschild 22 mit einer Lageraufnahme 23 umfasst. Der Lagerschild 22 weist außerdem einen Ringsteg 24 auf, dessen Außenumfangsfläche 26 mit der Außenumfangsfläche 16 des Gehäusekörpers 10 flächenbündig ausgerichtet ist. Der Lagerflansch 20 ist mit dem Lagerschild 22 und dem Ringsteg 24 vorzugweise einstückig, insbesondere als Kunststoffspritzgussteil, ausgebildet.

Der Lagerflansch 20 greift mit seinem Endabschnitt 27 in den Gehäusekörper 10, insbesondere den Ringflansch 14 ein, wobei der Ringflansch 14 mit dem Endabschnitt 27 insbesondere pressverbunden ist. Außerdem sind der Ringflansch 14 und der Endabschnitt 17 durch Laser-Durchstrahlschweißen stoffschlüssig miteinander gekoppelt.

Auf einer dem Endabschnitt 17 axial gegenüberliegenden Seite des Ringstegs 24 ist ein motorseitiger Verbindungsabschnitt 41 ausgebildet. Der motorseitige Verbindungsabschnitt 41 ist so weit radial nach innen abgesenkt, dass ein Motorgehäuse 40 so an den Ringsteg 24 anlegbar ist, dass die Außenumfangsfläche des Motorgehäuses 40 mit der Außenumfangsfläche des Lagerflanschs 26, insbesondere des Ringstegs 24, flächenbündig fluchtet. Damit bleiben die Außendimensionen der Motor-Getriebekombination gering.

In Fig. 3 ist ebenfalls gut erkennbar, dass angrenzend an den Ringsteg 24 im Lagerflansch 20 eine Crimpaufnahme 42 ausgebildet ist. Die Crimpaufnahme 42 ist durch mehrere auf dem Umfang des Lagerflanschs 20 verteilt in einer Umfangslinie angeordnete Nuten gebildet. Es ist auch möglich, dass eine einzige umlaufende Nut im Lagerflansch 20 vorgesehen ist, die eine Crimpaufnahme 42 bildet.

Das Motorgehäuse 40 umfasst an wenigstens einem längsaxialen Ende Crimpnasen 43. Die Crimpnasen 43 sind im Wesentlichen in Umfangsrichtung ausgerichtete Vorsprünge, die beim Aufsetzen des Motorgehäuses 40 auf den motorseitigen Verbindungsabschnitt 41 des Lagerflanschs 20 im Bereich der Crimpaufnahmen 42 angeordnet sind. Durch eine Kaltverformung, sogenanntes Crimpen, können die Crimpnasen 43 nun radial nach innen umgebogen werden und in die Crimpaufnahmen 42 eingreifen. Dadurch ist eine axiale Sicherung des Motorgehäuses 40 am Getriebegehäuse gebildet. Wenn, wie es bei dem Ausführungsbeispiel gemäß Fig. 3 vorgesehen ist, mehrere Crimpaufnahmen 42 in Umfangsrichtung verteilt über den Lagerflansch 20 angeordnet sind, erfolgt mittels der Crimpverbindung außerdem eine Verdrehsicherung zwischen dem Motorgehäuse 40 und dem Getriebegehäuse.

Die Herstellung des Getriebegehäuses gemäß einem bevorzugten Ausführungsbeispiel wird nachfolgend beschrieben:
Das Getriebegehäuse ist vorzugsweise vollständig aus Kunststoff gebildet, wobei zunächst der Gehäusekörper 10 und der Lagerflansch 20 durch Kunststoffspritzen hergestellt werden. Dabei wird für den Gehäusekörper 10 vorzugsweise ein für Laserlicht transparentes Kunststoffmaterial gewählt. Der Gehäusekörper 10 wird einstückig mit dem Lagerschild 12 gespritzt. Ebenso wird der Lagerflansch 20 einstückig mit seinem Lagerschild 22 durch ein Kunststoffspritzgussverfahren hergestellt. Für den Lagerflansch 20 wird jedoch ein Kunststoffmaterial gewählt, welches Laserlicht absorbiert.

Der Lagerflansch 20 wird mit seinem Endabschnitt 27 in den Ringflansch 14 des Gehäusekörpers 10 eingesetzt. Dabei wird vorzugsweise ein leichter Pressverbund hergestellt, so dass der Lagerflansch 20 mit dem Gehäusekörper 10 vorfixiert ist. In einem nächsten Arbeitsschritt wird ein Laserstrahl auf die Außenumfangsfläche des Gehäusekörpers 10 im Überdeckungsbereich 30 gerichtet. Der Laserstrahl durchdringt den Ringflansch 14 und trifft auf die Außenumfangsfläche des Endabschnitts 27 des Lagerflanschs 20 auf. Es kommt an dieser Stelle zu einer lokalen Temperaturerhöhung, so dass das Material des Gehäusekörpers 10 und des Lagerflanschs 20 lokal im Bereich der Berührungsflächen des Überdeckungsbereiches 30 aufschmilzt. Das Kunststoffmaterial fließt ineinander und formt so eine stoffschlüssige Verbindung.

Um die stoffschlüssige Verbindung über den gesamten Umfang des Getriebegehäuses herzustellen, ist bevorzugt vorgesehen, dass der Laserstrahl und das Getriebegehäuse relativ zueinander gedreht werden. Dabei kann entweder der Getriebegehäuse rotiert werden, so dass der Laserstrahl den gesamten Außenumfang des Getriebegehäuses überstreicht. Alternativ kann das Getriebegehäuse ortsfest gehalten werden und der Laserstrahl wird um das Getriebegehäuse herumgeschwenkt.

Vorzugsweise ist der Laserstrahl so eingestellt, dass er auf die Außenumfangsfläche 26 des Endabschnitts 27 des Lagerflanschs 20 fokussiert wird. So wird eine energieeffiziente Laser-Durchstrahlschweißung bewerkstelligt.

Zur Herstellung eins vollständigen Planetengetriebes mit dem Getriebegehäuse ist bevorzugt vorgesehen, dass Planetenräder und Sonnenräder des Planetengetriebes vor der Pressverbindung zwischen Gehäusekörper 10 und Lagerflansch 20 im Gehäusekörper 10 bzw. im Lagerflansch 20 angeordnet werden. Anschließend wird der Lagerflansch 20 mit dem Gehäusekörper 10 verbunden und stoffschlüssig fixiert.

Die zuvor beschriebene Erfindung eignet sich insbesondere zur Herstellung von Miniaturgetrieben. Das Planetengetriebe kann zwischen 1 und 5, insbesondere zwischen 1 und 4 Getriebestufen aufweisen. Dabei sind Übersetzungsverhältnisse bis zu 2000:1, insbesondere bis zu 1800:1, vorzugsweise bis zu 1708:1 oder bis zu 1650:1, möglich. Erfindungsgemäße Planetengetriebe können insbesondere in der Medizintechnik, beispielsweise für Medikamentenpumpen, oder im Automotive-Bereich eingesetzt werden. Ferner können die Planetengetriebe auch im Bereich Industrial Solutions, insbesondere im Bereich der Gebäudeautomation zum Einsatz kommen. Hierbei werden die Planetengetriebe beispielsweise in Beschattungssystemen, insbesondere für Antriebe von Markisen, Jalousien, Rollläden, Raffstoren, zur Verdunkelung und/oder zum Sonnenschutz eingesetzt. Des Weiteren können die Planetengetriebe auch in Türsystemen, Torsystemen und/oder Fenstersystemen beispielsweise zur automatischen Raumbelüftung, eingesetzt werden. Andere Anwendungsmöglichkeiten und Einsatzbereiche sind ebenfalls denkbar.

### Bezugszeichenliste

- 10: Gehäusekörper
- 11: erste Innenverzahnung
- 12: Lagerschild des Gehäusekörpers
- 13: Lageraufnahme des Gehäusekörpers
- 14: Ringflansch
- 15: paralleler Vorsprung
- 16: Außenumfangsfläche des Gehäusekörpers
- 17: Montageflansch
- 18: Dichtungselement
- 20: Lagerflansch
- 21: zweite Innenverzahnung
- 22: Lagerschild des Lagerflanschs
- 23: Lageraufnahme des Lagerflanschs
- 24: Ringsteg
- 25: achsparallele Ausnehmung
- 26: Außenumfangsfläche des Lagerflanschs
- 27: Endabschnitt
- 30: Überdeckungsbereich
- 35: Wellenlager
- 40: Motorgehäuse
- 41: motorseitiger Verbindungsabschnitt
- 42: Crimpaufnahme
- 43: Crimpnase

## Patentansprüche

1. Getriebegehäuse für ein Planetengetriebe mit einem hohlzylinderförmigen Gehäusekörper (10), der eine erste Innenverzahnung (11) aufweist, und einem Lagerflansch (20), der zumindest abschnittsweise koaxial in den Gehäusekörper (10) eingreift, so dass ein Überdeckungsbereich (30) gebildet ist, wobei der Gehäusekörper (10) und der Lagerflansch (20) im Überdeckungsbereich (30) durch eine Laser-Durchstrahlschweißung stoffschlüssig miteinander verbunden sind,
**dadurch gekennzeichnet, dass**
der Lagerflansch (20) im Überdeckungsbereich (30) eine zweite Innenverzahnung (21) aufweist.

2. Getriebegehäuse nach Anspruch 1,
**dadurch gekennzeichnet, dass**
der Gehäusekörper (10) und der Lagerflansch (20) jeweils einen Lagerschild (12, 22) aufweisen, der einen Innenraum des Getriebegehäuses axial begrenzt.

3. Getriebegehäuse nach Anspruch 2,
**dadurch gekennzeichnet, dass**
konzentrisch im Lagerschild (12, 22) eine Lageraufnahme (13, 23) für ein Wellenlager (35) ausgebildet ist.

4. Getriebegehäuse nach einem der vorhergehenden Ansprüche,
**dadurch gekennzeichnet, dass**
jeweils der Gehäusekörper (10) und/oder der Lagerflansch (20), insbesondere mit ihrem jeweils zugeordneten Lagerschild (12, 22), einstückig ausgebildet sind.

5. Getriebegehäuse nach einem der vorhergehenden Ansprüche,
**dadurch gekennzeichnet, dass**
der Gehäusekörper (10) und der Lagerflansch (20) im Überdeckungsbereich (30) zumindest abschnittsweise pressverbunden sind.

6. Getriebegehäuse nach einem der vorhergehenden Ansprüche,
**dadurch gekennzeichnet, dass**
die erste Innenverzahnung (11) an der zweiten Innenverzahnung (21) anliegt.

7. Getriebegehäuse nach einem der vorhergehenden Ansprüche,
**dadurch gekennzeichnet, dass**
der Lagerflansch (20) einen sich radial nach außen erstreckenden Ringsteg (24) aufweist, dessen Außenumfangsfläche (26) flächenbündig mit einer Außenumfangsfläche (16) des Gehäusekörpers (10) fluchtet.

8. Getriebegehäuse nach Anspruch 7,
**dadurch gekennzeichnet, dass**
der Ringsteg (24) wenigstens eine achsparallele Ausnehmung (25) aufweist, die formschlüssig in einen achsparallelen Vorsprung (15) im Gehäusekörper (10) eingreift.

9. Getriebegehäuse nach Anspruch 8,
**dadurch gekennzeichnet, dass**
der achsparallele Vorsprung (15) und die achsparallele Ausnehmung (25) komplementär trapezförmig ausgebildet sind.

10. Getriebegehäuse nach einem der vorhergehenden Ansprüche,
**dadurch gekennzeichnet, dass**
die erste Innenverzahnung (11) und die zweite Innenverzahnung (21) voneinander verschiedene Verzahnungsgeometrien aufweisen.

11. Getriebegehäuse nach einem der vorhergehenden Ansprüche,
**dadurch gekennzeichnet, dass**
die erste Innenverzahnung (11) ein geradverzahntes Hohlrad und die zweite Innenverzahnung (21) ein schrägverzahntes Hohlrad bilden.

12. Planetengetriebe mit einem Getriebegehäuse nach einem der vorhergehenden Ansprüche und mit wenigstens einem ersten Planetenrad, das mit einem ersten Sonnenrad und mit der ersten Innenverzahnung (11) kämmt, sowie wenigstens einem zweiten Planetenrad, das mit einem zweiten Sonnenrad und mit der zweiten Innenverzahnung (21) kämmt.

13. Motor-Getriebekombination mit einem Planetengetriebe nach Anspruch 12 und einem Motorgehäuse (40), das einen motorseitigen Verbindungsabschnitt (41) des Lagerflanschs (20) koaxial umgreift und mit dem Verbindungsabschnitt (41), insbesondere verdrehsicher, verbunden ist.

14. Motor-Getriebekombination nach Anspruch 13,
**dadurch gekennzeichnet, dass**
der Verbindungsabschnitt (41) wenigstens eine Crimpaufnahme (42)für eine radial nach innen umformbare Crimpnase (43) des Motorgehäuses (40) aufweist.

15. Verfahren zur Herstellung eines Getriebegehäuses nach einem der Ansprüche 1 bis 11, wobei ein Gehäusekörper (10) mit einer ersten
Innenverzahnung (11) und ein Lagerflansch (20) mit einer zweiten Innenverzahnung (21) bereitgestellt und formschlüssig koaxial zusammengeführt werden, so dass ein Überdeckungsbereich (30) gebildet wird, und wobei ein Laserstrahl auf den Überdeckungsbereich (30) gerichtet wird, so dass der Gehäusekörper (10) und der Lagerflansch (20) mittels Laser-Durchstrahlschweißen stoffschlüssig miteinander verbunden werden.

16. Verfahren nach Anspruch 15,
**dadurch gekennzeichnet, dass**
das Getriebegehäuse während des Laser-Durchstrahlschweißens rotiert wird,
so dass eine umlaufende Schweißnaht gebildet wird.

17. Verfahren nach Anspruch 15 oder 16,
**dadurch gekennzeichnet, dass**
der Laserstrahl auf eine Außenumfangsfläche 26 des Lagerflanschs (20) fokussiert wird.

## Claims

1. A gear unit housing for a planetary gear unit with a hollow-cylindrical housing body (10) which has first internal gearing (11), and with a bearing flange (20) which at least in portions engages coaxially in the housing body (10), so that a region of overlap (30) is formed, wherein the housing body (10) and the bearing flange (20) are connected together by a material-formed bond in the region of overlap (30) by laser transmission welding,
**characterised in that**
the bearing flange (20) has second internal gearing (21) in the region of overlap (30).

2. A gear unit housing according to Claim 1,
**characterised in that**
the housing body (10) and the bearing flange (20) each have an end shield (12, 22) which axially delimits an interior of the gear unit housing.

3. A gear unit housing according to Claim 2,
**characterised in that**
a bearing receptacle (13, 23) for a shaft bearing (35) is formed concentrically in the end shield (12, 22).

4. A gear unit housing according to one of the preceding claims,
**characterised in that**
in each case the housing body (10) and/or the bearing flange (20), in particular with their associated end shield (12, 22) in each case, are formed in one piece.

5. A gear unit housing according to one of the preceding claims,
**characterised in that**
the housing body (10) and the bearing flange (20) at least in portions are press-connected in the region of overlap (30).

6. A gear unit housing according to one of the preceding claims,
**characterised in that**
the first internal gearing (11) lies against the second internal gearing (21).

7. A gear unit housing according to one of the preceding claims,
**characterised in that**
the bearing flange (20) has an annular land (24) extending radially outwards, the outer peripheral face (26) of which is flush with an outer peripheral face (16) of the housing body (10).

8. A gear unit housing according to Claim 7,
**characterised in that**
the annular land (24) has at least one paraxial cutout (25) which engages in a positively locking manner in a paraxial projection (15) in the housing body (10).

9. A gear unit housing according to Claim 8,
**characterised in that**
the paraxial projection (15) and the paraxial cutout (25) are formed in complementarily trapezoidal manner.

10. A gear unit housing according to one of the preceding claims,
**characterised in that**
the first internal gearing (11) and the second internal gearing (21) have different tooth geometries from each other.

11. A gear unit housing according to one of the preceding claims,
**characterised in that**
the first internal gearing (11) forms a spur-toothed ring gear and the second internal gearing (21) forms a helically-toothed ring gear.

12. A planetary gear unit with a gear unit housing according to one of the preceding claims and with at least a first planet wheel which meshes with a first sun wheel and with the first internal gearing (11), and also with at least a second planet wheel which meshes with a second sun wheel and with the second internal gearing (21).

13. A motor/gear unit combination with a planetary gear unit according to Claim 12 and a motor housing (40) which coaxially encompasses a motor-side connection portion (41) of the bearing flange (20) and is connected, in particular in a torsion-proof manner, to the connection portion (41).

14. A motor/gear unit combination according to Claim 13,
**characterised in that**
the connection portion (41) has at least one crimp receptacle (42) for a crimp nose (43) of the motor housing (40) which can be deformed radially inwards.

15. A method for producing a gear unit housing according to one of Claims 1 to 11, wherein a housing body (10) with first internal gearing (11) and a bearing flange (20) with second internal gearing (21) are made available and are brought together coaxially in a positively locking manner, so that a region of overlap (30) is formed, and wherein a laser beam is directed onto the region of overlap (30), so that the housing body (10) and the bearing flange (20) are connected together by a material-formed bond by means of laser transmission welding.

16. A method according to Claim 15,
**characterised in that**
the gear unit housing is rotated during the laser transmission welding, so that an encircling weld seam is formed.

17. A method according to Claim 15 or 16,
**characterised in that**
the laser beam is focused onto an outer peripheral face (26) of the bearing flange (20).

## Revendications

1. Boîtier d'engrenage pour un engrenage planétaire comportant un corps de boîtier (10) en forme de cylindre creux, qui comprend une première denture intérieure (11), et une bride de palier (20), qui vient en prise au moins par segment coaxialement dans le corps de boîtier (10) de sorte qu'une zone de recouvrement (30) est formée, le corps de boîtier (10) et la bride de palier (20) étant reliés dans la zone de recouvrement (30) par liaison de matière grâce à une soudure par pénétration laser, **caractérisé en ce que** la bride de palier (20) présente une deuxième denture interne (21) dans la zone de recouvrement (30).

2. Boîtier d'engrenage selon la revendication 1, **caractérisé en ce que** le corps de boîtier (10) et la bride de palier (20) comportent respectivement un flasque de palier (12, 22), qui délimite axialement une chambre interne du boîtier d'engrenage.

3. Boîtier d'engrenage selon la revendication 2, **caractérisé en ce qu'**un logement de palier (13, 23) pour un palier d'arbre (35) est formé concentriquement dans le flasque de palier (12, 22).

4. Boîtier d'engrenage selon l'une quelconque des revendications précédentes, **caractérisé en ce que** respectivement le corps de boîtier (10) et/ou la bride de palier (20) sont formés en un seul bloc, notamment avec leur flasque de palier (12, 22) respectivement associé.

5. Boîtier d'engrenage selon l'une quelconque des revendications précédentes, **caractérisé en ce que** le corps de boîtier (10) et la bride de palier (20) sont liés par pression au moins par endroits dans la zone de recouvrement (30).

6. Boîtier d'engrenage selon l'une quelconque des revendications précédentes, **caractérisé en ce que** la première denture intérieure (11) repose contre la deuxième denture intérieure (21).

7. Boîtier d'engrenage selon l'une quelconque des revendications précédentes, **caractérisé en ce que** la bride de palier (20) présente une âme circulaire (24) s'étendant radialement vers l'extérieur, dont la surface périphérique extérieure (26) est à affleurement avec une surface périphérique extérieure (16) du corps de boîtier (10).

8. Boîtier d'engrenage selon la revendication 7, **caractérisé en ce que** l'âme circulaire (24) présente au moins un évidement parallèle à l'axe (25), qui vient en prise par complémentarité de forme dans une avancée parallèle à l'axe (15) dans le corps de boîtier (10).

9. Boîtier d'engrenage selon la revendication 8, **caractérisé en ce que** l'avancée parallèle à l'axe (15) et l'évidement parallèle à l'axe (25) sont formés de manière complémentaire en forme de trapèze.

10. Boîtier d'engrenage selon l'une quelconque des revendications précédentes, **caractérisé en ce que** la première denture intérieure (11) et la deuxième denture intérieure (21) présentent des géométries de denture différentes l'une de l'autre.

11. Boîtier d'engrenage selon l'une quelconque des revendications précédentes, **caractérisé en ce que** la première denture intérieure (11) forme une roue creuse à denture droite et la deuxième denture intérieure (21) forme une roue creuse à denture oblique.

12. Engrenage planétaire comportant un boîtier d'engrenage selon l'une des revendications précédentes et comportant au moins une première roue planétaire, qui s'engrène avec une première roue solaire et la première denture intérieure (11), ainsi qu'au moins une deuxième roue planétaire, qui s'engrène avec une deuxième roue solaire et la deuxième denture intérieure (21).

13. Combinaison moto-réductrice comportant un engrenage planétaire selon la revendication 12 et un carter de moteur (40) qui entoure coaxialement un segment de liaison (41) du côté moteur de la bride de palier (20) et est relié au segment de liaison (41), notamment de manière bloquée en rotation.

14. Combinaison moto-réductrice selon la revendication 13, **caractérisée en ce que** le segment de liaison (41) présente au moins un logement de sertissage (42) pour un nez de sertissage (43) du carter de moteur (40) déformable radialement vers l'intérieur.

15. Procédé de fabrication d'un boîtier d'engrenage selon l'une des revendications 1 à 11, un corps de boîtier (10) étant mis à disposition avec une première denture intérieure (11) et une bride de palier (20) avec une deuxième denture intérieure (21) et assemblés coaxialement par complémentarité de forme de sorte qu'une zone de recouvrement (30) soit formée et un faisceau laser étant dirigé sur la zone de recouvrement (30) de sorte que le corps de boîtier (10) et la bride de palier (20) soient reliés l'un à l'autre par liaison de matière au moyen d'une soudure par pénétration de faisceau laser.

16. Procédé selon la revendication 15, **caractérisé en ce que** le boîtier d'engrenage subit une rotation pendant la soudure par pénétration de faisceau laser de manière à former un point de soudure circulaire.

17. Procédé selon la revendication 15 ou 16, **caractérisé en ce que** le faisceau laser est concentré sur une surface périphérique extérieure 26 de la bride de palier (20).
